# EUROPEAN PATENT APPLICATION

(11) **EP 3 869 435 A1**
(43) Date of publication of application: **25.08.2021**
(21) Application number: 20158281.4
(22) Date of filing: 19.02.2020
(51) Int. Cl.: G06Q 20/40, G06Q 20/02, G07D 7/00

(54) **SYSTEM FOR TRACKING BANKNOTES TRANSACTIONS**

(71) Applicant: Vigotti, Francesco, 24050 Zanica (BG) (IT)
(72) Inventor: Vigotti, Francesco, 24050 Zanica (BG) (IT)

(57) **Abstract**

A method and a system comprising multiple devices designed to efficiently track banknotes interactively during transactions, discouraging the omission of transactions by means of banknotes while preserving a high level of privacy for subjects who make payments.

This invention uses a hidden timestamp mark, applied digitally using a centralized system and associated with the identification code of each banknote, together with multiple stackable strategies used in real time which are parametrized on the data previously collected to determine the need for identification of the bearer of banknotes at the end of each transaction, and subsequently to identify suspicious subjects or commercial activities.

## Description

### Background of the Invention:

### Field of the Invention

This invention belongs to the field of systems and methods to counteract tax evasion and criminal activities that use cash as a means of payment by monitoring the use of banknotes between legal and natural persons.

### Description of the Prior Art

There are already known techniques to counteract and disincentive the omission of economic transactions such as receipt-lottery schemes, electronic invoicing, progressively numbered and printed receipts, limits on the maximum amount of cash in single transaction, various incentives for using digital payments that are more easily traceable such as laws which require the availability of POS in all commercial activities and attempts to lower fees for electronic transactions for merchants, inspections in person at the commercial activities, data mining on banking activity and economic compliance indicators to find suspicious behaviours.

Banknotes are the preferred medium for those commercial transactions that you don't want to leave a trace, being banknotes the payment medium with the highest compromise between practicality and privacy.

The individual components of the technical ecosystem that may be needed to be able to perform a centralized tracking of all banknotes in all commercial transactions are already known to a person skilled in the art, however, some aspects that make the application impractical still exists, such as the total elimination of privacy on payers by eliminating the only means of payment they had available not already tracked, the procedural burden on transactions and the difficulty in preventing the omissive conduct.

### SUMMARY OF INVENTION

### Technical Problem

In light of the above the object of the present invention is a method able to preserve a good level of privacy for paying subjects, reducing the time required for transactions and technical requirements compared to other known banknote tracking methodologies and capable of discouraging and detecting omissions.

### Solution to Problem

The present invention uses an inaccessible to the public timestamp mark applied in a virtual digital way on the single banknotes as a means to regulate the need for identification of the bearer of banknotes during each transaction in real time. Banknotes are always tracked by legal persons during transactions, but the payer's identity can remain anonymous during most commercial transactions, it is requested interactively at the end of the payment procedure, only if determined necessary by a calculation performed in real time by a centralized system.

The central system analyses the time difference between the moment in which the transaction takes place and the previously recorded value of the timestamp mark of all the banknotes involved in the transaction, generating a value corresponding to a risk factor that increases with the increase in the time differential. This risk value of the banknotes is then processed by the central system in real time during the transaction, together with the pre-calculated thresholds assigned to the cluster to which the business that is receiving payment belongs, by a set of computer implemented strategies to decide whether the identification of the bearer of the banknotes is necessary.

The cluster is a group of subjects who possess similar characteristics, as in cluster analysis, constituted by the known information on the legal person, i.e. commercial activity information, together along with extrapolated information on historical data of the recorded transactions and is calculated and updated by the central system.

Computer implemented strategies are a set of computer implemented methods that allow the entity in charge of operating the system to maintain the desired percentage of controlled identities and dynamically intervene with more targeted strategies when necessary.

The computer implemented strategies, use the pre-calculated values from the cluster analysis and transaction history, along with data received during the transaction to restrict the identity request to the most interesting transactions only.

### Advantageous Effect of Invention

The application of this method allows buyers to lower the probability of an identification request, by using banknotes that have a recent timestamp mark, i.e. banknotes from recent withdrawals or legally declared transactions, thus allowing an honest person to avoid the identification system most of the time and on purpose if desired, while lowering at the same time the perception of damage to privacy and the waste of time during transactions, but leaving the dishonest subjects unable to proceed in the same way.
The holder of banknotes obtained in an untracked operation, will know that most probably these banknotes will trigger an identification request, and automatic identifications if deposited in the bank, and it will be difficult for him to spend these banknotes and going unnoticed, he will therefore have an incentive to avoid such behaviour.

Furthermore, since the identification during the transactions is sporadic, it is not possible for the controlling authority to determine with certainty all the changes in ownership of a banknote, this is a desired effect to avoid an excessive reduction of privacy, and an advantage for the practical applicability.

This tracking system remains not compulsory for the correct outcome of the single transaction in banknotes, increasing again the practicality of the system, for example by not preventing transactions by banknotes during operational interruptions.

This method makes it possible to create a self-regulated dynamic system with a mechanism that can be easily avoided by honest subjects, but with difficulties from those dishonest, this mechanism pushes honest subjects to decrease the average differential of the timestamp mark ridden during transactions to avoid being annoyed by identification requests, and consequently to further distance the habits of the two typologies of subjects, because for fraudulent subjects this outcome is much more difficult to achieve.
This helps to get more and more distanced clusters members during the analysis of the collected data and to select the best cases to investigate.

Since the identification of the subject in possession of the banknote, however, is carried out in real time, and all banknotes scanned during declared transactions, this system allows to provide a valid instrument to the police forces interested in using banknotes to investigate criminal activities also by tracing specific banknotes selectively.

### Brief Description of Drawings

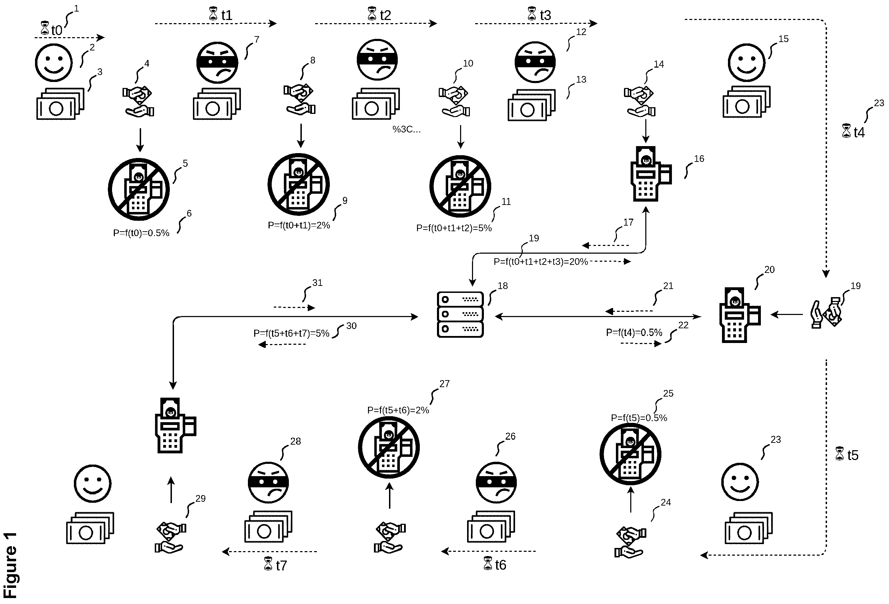

Fig. 1 shows a simplified schematisation of the scoring concept based on the timestamp mark differential applied during banknotes transaction.

### Description of Embodiments

Hereinafter I will call the central system the set of hardware and computer-implemented methods used by the controlling entity to perform storage, data processing/analysis and providing the communication interfaces for external devices used by multiple entities, which include commercial activities, banks or agents that interact with the system.

The word agents is used to define persons appointed by the authority who has the duty to investigate possible illegal behaviour.

The following describes the technical solutions in the embodiments of the present invention.
The described embodiments are merely some but not all of the embodiments of the present invention. All other embodiments obtained by a person of ordinary skill in the art based on the embodiments of the present invention without creative efforts shall fall within the protection scope of the present invention.
Since the present invention can be used by different controlling entities with different legislative constraints and economic targets, it is clear that some parameters and some functionalities described herein, will have to be adapted to obtain the best possible result in the given context.

A person skilled in the art is already aware of software and hardware tools for managing a large amount of data such as hundreds of millions of transactions per day, the storage and computing capacity necessary for processing the data required for the implementation of the system, since these fall within the spectrum of what can also be managed by a small medium sized business in the field of data mining or IoT.

Furthermore it must also be considered that the central system as described is not indispensable for the execution of each single commercial transactions, unlike, for example, credit card networks, so even total and prolonged interruptions in operation or loss of data only generate internal inefficiencies but do not negatively affect commercial activities, greatly lowering the technical requirements and costs for implementation.

The implementation of the system does not necessarily have to be universal, a control entity such as a state organization could proceed with experiments in some geographical areas, and then expand that area gradually, the system works, albeit less efficiently, also in a partial implementation context, i.e.: excluding categories of commercial activities.

I will list some of the most important subjects in an implementation context:

### Banks:

An interface from the central system allows banks to report banknotes whose timestamp mark must be updated and in addition the identification data of the bearer of the banknotes in case of deposits.

The bank, through a banknote management device, scans all banknotes identification codes during banknotes deposit and withdrawal operations.

This scan operation is similar to those that are already performed during withdrawals and deposits, that is the banknotes validity check through a scanning procedure and the subsequent transmission of the data regarding the amounts and the identity of the account to the central server of the bank to record the transaction internally, with the difference that now some information is also reported to the central system.

In case of temporary technical problems the bank can delay or even ignore the sending to the central system, this possibility lowers the technical requirements. Sending transactions data is generally mandatory and omissions can still generate suspicions if they appear arbitrary.

During a deposit transaction, the details necessary to identify the subject who is carrying out the operation such as the national identity number are sent together with the banknote codes.

During the withdrawal operations it is not necessary to send the customer identification, thus doing so this system can lighten the load on the subject's privacy, leaving the banknotes withdrawn anonymous.

The operation of sending banknote codes during withdrawals allows the central system to update the timestamp mark on the banknotes, by doing so the bank is able to release banknotes with a fresh timestamp mark.

These operations are also performed by the ATMs.
The banks can also archive the banknotes unique codes for their benefit so as to be able to report them to the central system and make traceable individual banknotes that could become object of theft.

### Banknote scanning device:

The banknote scanning device is a device in possession of a unique identifier, and assigned to a legal person such as a commercial activity, which has the ability to scan banknotes identification codes, the identity of the banknotes bearer and it is connected to the central system for example through the internet.

The device in the merchant's possession can have various forms, it can be similar to a handheld barcode scanner, convenient to be transported and placed over the banknote identification code or similar in shape to a professional banknote counter if the activity in question prefers it for speed or volume of banknotes managed.

In some embodiments the device could also print a receipt with a summary of the banknotes scanned.

Using the device allows a supervision on the operations carried out on banknotes by employees of the commercial activity if a report inside the device is maintained.

### Agent:

By agent, in the context of this invention is meant an agent appointed by the authority in charge, as could be an IRS agent or a law enforcement agent.

### Legal persons:

Commercial, industrial or professional activities, in many countries these types of activities are already obliged by law to have a Point Of Sale connected to the internet for debit/credit card payments.
This is an example of a technical requirement imposed by the state authority to encourage digital payments, in this case it is about having an additional device to track payments by banknotes.

One of the devices described in the claims comprises a set of components comprising a banknote scanner capable of reading the unique identification code, a means of reading the identity of the payer, which could be a smart card reader, ability to transmit data through an internet connection and an interface for the operator of the device that allows, among other things, the reporting of transaction stages and reading of incoming requests from the central system.

During a purchase the payer hands banknotes to a vendor, the vendor then signals to the system through the device the beginning of a banknotes transaction, scans the banknotes received through the device, then proceeds to signal the beginning of the scanning of the returned change banknotes if any, scans the change banknotes and then signal the end of the operation.
Scanning returned banknotes prevents a seller from self-laundering untracked banknotes without being noticed.

Following the signal associated with the end of the commercial transaction, the device sends all the data acquired to the central system, which proceeds to calculate the score of the banknotes by comparing the current time with the timestamp mark previously assigned to individual banknotes, the total amount of the transaction and the threshold variables belonging to the same cluster of the specific commercial activity, then identifies a series of computer implemented methods to be applied that correspond to the implementation strategy at that given moment for the available variables and returns to the terminal a signal to request identification of the payer if necessary, or the end of the procedure.

If a slowdown prevents the central system from being sufficiently fast to provide a response, a timeout threshold may avoid unnecessary waiting.

If the operator notices a procedural error he can cancel the operation and re-run the necessary steps.
The banknote scanner can also proceed with verifying banknote authenticity as in a common banknote checker so as not to have to perform the operation in another additional device.

Since the banknotes of the change are scanned as well, and the operation is visible to the customer, visual proof is provided to the customer of the authenticity of the banknotes returned.

Since the scan operations during transaction are visible to the payer, he can visually verify that the transaction has been reported to the authority, in terms of assurance regarding the destination of the taxes that are being paid during the purchase, such as VAT, the freshness of the timestamp mark of the received banknotes, thus ensuring a high level of anonymity in the next subsequent transaction with those banknotes, and allows any incognito agents present to the operation to note an omitted declaration without exposing himself.

At the end of the transaction, if the central system deems it necessary to request an identification of the payer, it sends the request to the merchant's device which forward the request to the payer.

If the seller has no possibility of proceeding with the identification, he may indicate that he must ignore the request. This type of event is in any case tracked and can trigger more further audits on the justifications provided in the various cases.

In some types of activities in which the seller has information on the purchaser who gave him banknotes but in which he is unable to perform the identity scanning operation, he can provide information on the customer using the device, if the type of the device owned by the merchant allows it, being this information entered and not scanned directly it will have a different tag on both the third party assigned banknotes holder identity and the legal person that is assigning ownership which could be subject to audit on the data sent if anomalies are found, otherwise this feature could be used to try to circumvent the system.

If the payer does not have a valid identifier available, based on the different implementations of the system he can proceed with a biometric recognition or differently the identification is reported as failed for that specific reason. If the payer does not want to proceed with the identification, the seller will indicate through the device that the payer did not want to proceed with the identification. This information could be interesting to investigate, especially if recurrent, or used by agents who were in the area.

If, for example, a banknote requested identification of the bearer because tagged as stolen, an agent could be interested in accessing the video surveillance cameras in the area in attempts to identify the bearer, or simply identify the bearer in person if it's near the location during the transaction.

An identification refused by banknotes bearer and carried out in person would also highlight the subject in the system more than usual verifications.

It is clear that if a certain commercial activity has a number of refused identification far above the average of his cluster, it will be very interesting to proceed in person to identify payers who are refusing identification, to understand the reasons for such refusals and if necessary investigate further on the subjects.

Device failures and connectivity problems are recorded, and if suspicious, further in-person checks can be triggered.

To facilitate in-person checks, an additional device is made available to the agent on site, on which the missed identifications in his geographic area are reported in real time.

To improve the efficiency and leverage of on site inspections it is possible to allow local authorities to enable strategies in the central system that increase the identification requests in a specific area or on a specific activity at a given time.

If the buyer is a foreigner, the merchant can report it to the central system through the device, the identification is ignored but the event traced, and analysed to prevent the justification for not identifying becoming a way to circumvent the system.

Analysing the data it will be possible to estimate if the reasons given to the system for missed identification and the percentages of refusal to identify are justified on the basis of the variables associated with the legal person such as the type of activity and location and if further investigation is necessary.

### An honest person:

An honest person is aware of the main rule of the system, that is the hidden timestamping mechanism on banknotes, and therefore when he prefers not to be tracked or waste time during transactions he will use banknotes recently scanned.

If an honest person has habits that clash with the logic of this invention, for example using a safe to accumulate legally obtained banknotes, he could incur more checks than another citizen with a similar clustering variables but which make a different use of cash.
However, these subjects can easily be excluded from further checks during an automated cross-check with other available datasets such as a banking activity dataset, or through further investigations, so the person can easily proceed as he wishes, only that pursuing some discouraged habits he will probably be asked to scan the ID more often than usual, if the honest person wanted to avoid this annoyance too, an operation to update the timestamp mark with a deposit and immediate withdrawal of banknotes at an ATM could resolve the issue.

### Untracked transactions:

It will be difficult to use untracked money without triggering requests for identification, furthermore, once this system has been implemented, in order to avoid identification requests, banknote users will tend to use untracked banknotes in further untracked transactions activities, bringing these banknotes even more in evidence for the system during the first next tracked transaction or bank deposit.

The more you try to evade the system during banknotes transactions, the more the system has lost sight of those banknotes, the more it will pay attention to it in the future.

Many illegal activities make use of banknotes because these are not systematically traced, are difficult to counterfeit, have a defined worth and are easily reusable.
The banknotes exchanged during these illegal transactions are often the result of further untracked activity to avoid the risk of being identified by the already existing cross-checks on bank records, in that way the cash will certainly have a timestamped mark differential that is higher compared to other banknotes circulating on the cluster of the owner or of the activities where the money will eventually be legally spent, therefore will be difficult to self-launder those banknotes without being noticed by the system.

### Clustering:

Clusters are classifications of legal persons and natural persons based on the variables that distinguish the subjects through a cluster analysis achieved by algorithms known to a person skilled in the art of data mining and statistical data analysis on the available data including socio-economic and geographic data.

### The central system:

The central system takes care of receiving and storing information including: transaction details, answers to identification requests, details on technical problems encountered by the connected devices, cluster membership of all subjects.
The central system is also responsible for archiving and updating the timestamp marks associated with individual banknotes.
The central system applies computer implemented strategies in real time to establish whether an identification of the payer is required, based on the known transaction variables available before the identification step, including the timestamp mark differential of banknotes, amount of transaction, parameters associated with the seller and his cluster.

The central system occasionally perform a reprocessing of the collected and available data in order to redefine clusters and thresholds for those strategies that are based on the average thresholds in order to keep identification requests in the desired percentage range, for example: If, due to the desire to reduce identification requests, the population of a given area get used to keep less cash at home, this will lower the average of the timestamp mark differential for that given area, vice versa in a context of lack of trust in the banks or an increase in fees on digital payments, the opposite may occur.
It is therefore important to occasionally update the parameters of the computer implemented strategies in the central system to keep the curve of identification requests low for most people to eliminate data noise and highlight only the most interesting cases.

Data mining activities on the central system tracked data and data available from other sources including bank accounts information, income statements, characteristics and location of the commercial activities will allow to further improve clusterization.

Fig. 1 shows an example of the operating logic of the invention, the example starts with some banknotes just withdrawn (3) or obtained in a previous declared transaction and therefore having a recent timestamp mark assigned to their identification codes; the banknote holder (2) carries out a transaction (4) and the dishonest subject (7) to whom the banknotes are delivered decides illegally not to declare the transaction using the transaction declaration device (5), the probability that this transaction had to request an identification (6) of the paying subject (2) would have been very low, as calculated on the basis of the small difference between that point in time and the date of application of the last timestamp mark applied to the banknotes plus the time spent by the banknotes in the possession of the bearer t0 (1).
During a subsequent undeclared transaction (8) we see how the hypothetical probability of identification need has now increased (9) as the time elapsed since the banknote timestamp mark application differential now equal to t0 + t1, we then have a further undeclared transaction (10) and the probabilities of an identification request continue to increase (11), they are now at a hypothetical 5% for those banknotes, not declaring the transactions obviously these identification requests do not take place, but will increase the probability of an identification request during the first next declared transaction (14).
To better describe the differences between the banknotes (3) and (13) each individual banknote has a timestamp mark assigned digitally and not visible to the bearer, the calculation for the need for identification must take into account the individual time differentials between the time of the declaration of the transaction and the timestamp marks assigned to each banknote, the amount of the transaction, the pre-calculated averages of the time of possession of the banknotes of the cluster identified by the parameters available for that single transaction, each individual banknote will have its own probability of triggering an identification, here to simplify it can be thought that the banknote group (13) is a subgroup of banknotes (3) and that each group of banknotes in undeclared transactions in Fig. 1 is a subgroup of the group of banknotes traced in a previous declared transaction.

In the subsequent transaction (14) an honest subject (15) declares the transaction (14) through the device that scans the banknotes (16) and sends the data (17) to the central system (18).
The central system (18) calculates the time differential between the last timestamp mark assigned to the banknotes and the current time, which in the example is given by the time elapsed since the last declared transaction t0 + t1 + t2 + t3 (19), being the time differential the sum of t0+t1+t2+t3 higher than the average between t0 t1 t2 and t3 the probability of an identification request for the dishonest paying subject (12) is now 20%, the central system then assigns a new timestamp mark to the declared banknotes thus resetting the previous time differential, and the honest subject (15) can spend these banknotes in a subsequent transaction (19) with a low probability of being asked for identification (22) as the time elapsed since the last assignment of the timestamp mark to the banknotes corresponds only to the time of possession t4 (23) of the by last subject (15), the declared transaction (19) sends the data to the central system (18) through the transaction reporting device (20) which calculates a low need for identification (22) and updates the banknotes timestamp mark so that a in the next declared transaction (24) the honest person who declared the transaction while receiving banknotes maintains a low probability of triggering an identification request (25), the dishonest subject (26), however, decided not to declare the transaction while receiving those banknotes thus increasing the time gap between the timestamp mark assigned to the banknotes in the central system and the current time, which continues to increase by adding up the banknotes possession time between not declared transactions (27).

It can be seen that during the subsequent declared transaction (29), after a chain of undeclared transactions , a higher probability of identification request (30) is calculated for the dishonest subject (28) than the initial probability value (25) that would have been used if the subsequent transaction had been declared (24). The dishonest subjects (26,28) who did not declare the transactions in which they received the banknotes (25,27) are more likely to be tracked in the system than an honest subject (23), the values shown in Fig. 1 are only an example, in a real application the average possession time of banknotes for a single subject is used for the calculation of the probability of identification curve.

The calculation as mentioned above is also influenced in real time by additional computer implemented methods strategies contained and enabled in the central system that will use the information received in real time during the transactions (17,21,31) to determine the probability and therefore the importance of asking for an identification of the bearer of the banknotes.

## Claims

1. Method for tracking banknotes and perform payer identification during cash transactions with an improved support to the privacy of the payer by requesting payer identification in a limited number of transactions and with an operating logic that discourages the omission of transactions, and with reduced technical and availability requirements for implementation in an environment comprising a plurality of subjects which have the ability to communicate with a centralized system in real time and to scan banknotes and perform payer identification, **characterized by**:
• Assign a timestamp mark to the unique code of each individual banknote, the timestamp mark is updated during the banknote owner change operations reported to the central system, the timestamp does not need to be pre-assigned and can be initialized during the first encounter of a banknote, this timestamp mark is hidden to the public and is digitally stored in the centralized system, the difference between the timestamp mark for the banknotes involved and the transaction time is used in the scope of each transaction together with the context information available concerning the transaction to compute whether the identification of the banknotes bearer is necessary.
• Exclusion of coins from tracking.
• Require to report to the central system, through the scan operation, about banknotes given in change operations.
• Requiring the collaboration of banks, which must send information on unique codes of banknotes received during the deposits operations together with the identity of the bearer of the banknotes and the deposit account owner.
• Requiring the collaboration of banks, which must send information on unique codes of the banknotes withdrawn.
• A set of computer implemented methods which calculate in real time the need for identification of the payer during each single commercial transaction based on information available before the identification phase begins.
• Allowing the commercial transactions and bank deposits and withdrawal by means of banknotes to be performed in the absence of communication to the central system, the information available can be transmitted after the restoration of the functionalities, in these cases not all the interactive steps between the central system and the subjects take place but the available information and the interruption are recorded.
• An interactive procedure during commercial transactions declarations between the entity that is receiving the banknotes and the central system, in which the central system can request for indemnification of the payer on the basis of the involved banknotes identification codes and their previously assigned timestamp mark and the output of the other computer implemented methods that may be active at that time for the provided information concerning the transaction.
• Storing banknotes information, transactions information and identification requests results for further analysis comprising identification of possible suspect subjects and data mining operations used to rebuild thresholds for the computer implemented methods that evaluate the need for identification requests in real time during the commercial transactions declarations.

2. Method according to claim 1, **characterised in that** configuration parameters of the computer implemented methods for the data collection, analysis and real time processing can be updated automatically, manually and even temporarily.

3. Method according to claim 1, where the implemented central system is capable to transmit information in real time to third parties not participating in the transactions comprising information about technical failures recorded, failed identifications and the additional information available including the calculated importance value for the identification of the payer.

4. Method according to claim 3, where real time information sent are selected and made available by the central system to on site agents in charge so that they can proceed with the identification and inspection in person.

5. Method according to claim 1, where economic entities which already have the identification data of the banknotes bearer proceed automatically to provide banknote identification codes and bearer identification information to the central system.

6. Method according to claim 1, where the configuration parameters of the computer implemented methods used to determine if identification of the payer is required are temporarily and selectively altered for a selected subgroup of commercial activities.

7. Method according to claim 1, where payer identity is any useful information to identify a natural or legal person, acquired directly by a designated device or provided, the identification source is also recorded.

8. Method according to claim 1, where the implementation takes place in a limited area or on a subgroup of the available subjects.

9. Method according to claim 1, where during network or system outages data are provided in asynchronous way even without the possibility of carrying out a subsequent interactive identification of the payer.

10. A system for banknotes tracking comprising :
devices associated with a unique identifier and assigned to natural or legal persons comprising means for :
• Scanning banknotes unique codes.
• Signalling events about banknotes transactions stages.
• Receiving signals and information from the central system in real time, and manifesting those signals during the transaction stages.
• Acquiring identification data about a natural person.
• Communicating with the central system transmitting and receiving data acquired during banknote transactions.
• Communicating with the central system transmitting the device unique identifier.
• Communicating with the central system transmitting identification data.

11. A System according to claim 10, where the identification data is anything that allows the central system to identify a subject in the application context and in accordance with applicable laws including an Identity smart card, an ID card, a phone number or biometric data.

12. A System according to claim 10, where the system is also capable of identifying counterfeit banknotes using a combination of the banknotes serial number, the information stored in the central system about the banknotes and the banknotes scanner features of the device.

13. A System according to claim 10, where the devices whose task is to send transactions information to the central system are able to store data internally during service outages in order to retry the sending of the stored data when the functionality is restored.

14. A System according to claim 10, where the devices included in the system are able to print a receipt containing the summary of the operations performed.

15. A System according to claim 10, where the devices are always connected in an always on connection to the central system which can then monitor their status.
